# EUROPÄISCHE PATENTSCHRIFT

(11) **EP 3 798 064 B1**
(45) Veröffentlichungstag und Bekanntmachung des Hinweises auf die Patenterteilung: **08.03.2023**
(21) Anmeldenummer: 20198257.6
(22) Anmeldetag: 25.09.2020
(51) Int. Cl.: B60S 1/04, F16F 1/38

(54) **VORRICHTUNG ZUM EINBRINGEN EINER TÜLLE IN EINE AUFNAHME- ODER BEFESTIGUNGSÖFFNUNG EINER WISCHERVORRICHTUNG**
DEVICE FOR INSERTING A GROMMET INTO A MOUNTING OR FIXING HOLE OF A WIPER DEVICE
DISPOSITIF D'INSERTION D'UN MANCHON DANS UNE OUVERTURE DE RÉCEPTION OU DE FIXATION D'UN DISPOSITIF ESSUIE-GLACE

(30) Priorität: 27.09.2019 DE 102019214825
(43) Veröffentlichungstag der Anmeldung: 31.03.2021
(73) Patentinhaber: Robert Bosch GmbH, 70442 Stuttgart (DE)
(72) Erfinder: Kovac, Vladimir, 22310 Simanovci (RS); Smiljanic, Milan, 22330 Nova Pazova (RS)

(56) Entgegenhaltungen:
- WO-A1-03/051690
- WO-A1-2005/080156
- US-A1- 2018 118 167

## Beschreibung

Die Erfindung betrifft eine Vorrichtung zum Einbringen einer Tülle in eine Befestigungsöffnung einer Wischervorrichtung, sowie ein Verfahren zum Einbringen einer Tülle in eine Wischervorrichtung mittels einer solchen Vorrichtung.

### Stand der Technik

Es sind Vorrichtungen zum Einbringen einer Tülle in eine dazu vorgesehene Öffnung bekannt. Oftmals wird dazu ein Schieber verwendet, mittels welchem die Tülle in die Öffnung eingeschoben wird.

Die US 2018/118167 A1 offenbart eine Vorrichtung zum Einbringen einer Tülle in eine Befestigungsöffnung einer Wischervorrichtung.

### Offenbarung der Erfindung

Die vorliegende Erfindung mit den Merkmalen des Hauptanspruchs zeichnet sich demgegenüber vorteilhaft durch ein Führungselement aus, welches einen Führungskanal zum Führen einer Tülle beim Einschieben in die Befestigungsöffnung aufweist. Dadurch kann die Tülle in verbesserter Weise in die Befestigungsöffnung einer Wischervorrichtung eingebracht werden.

Durch die in den Unteransprüchen aufgeführten Merkmale sind vorteilhafte Weiterbildungen der Erfindung nach dem Hauptanspruch möglich. So ist es von Vorteil, wenn eine Halterung für zumindest einen Bereich der Wischervorrichtung, welcher die Befestigungsöffnung der Wischervorrichtung aufweist, angeordnet ist. Dadurch kann zusätzlich an Stabilität verliehen werden.

Von Vorteil ist es auch, wenn das Führungselement eine Abdeckung zur Führung und/oder Zentrierung des Schiebers aufweist. Wodurch der Schieber einfacher und kontrollierter betätigt werden kann.

Auch ist es von Vorteil, wenn das Führungselement zumindest eine Ausnehmung zur Zentrierung des Führungskanals gegenüber der Befestigungsöffnung der Wischervorrichtung aufweist. Wodurch das Einbringen der Tülle in die Befestigungsöffnung einfacher und kontrollierter erfolgen kann.

Vorteilhaft ist es auch, wenn der Führungskanal einen Bereich zur Aufnahme der Tülle in das Führungselement aufweist, der zumindest im Wesentlichen zylindrisch ausgebildet ist. Dadurch wird ein einfaches und schnelles Einbringen der Tülle in den Führungskanal des Führungselements ermöglicht.

Vorteilhaft ist es auch, wenn der Führungskanal einen Bereich zur Deformierung der Tülle beim Einschieben in die Befestigungsöffnung aufweist, der zumindest im Wesentlichen konusförmig zulaufend ausgebildet ist. Dadurch wird das Einbringen der Tülle in die Befestigungsöffnung erleichtert.

Auch ist es vorteilhaft, wenn der Führungskanal an einem Ende, insbesondere an einem Ende des zumindest im Wesentlichen konusförmig zulaufendem Bereichs, vorzugsweise an einer Austrittsöffnung, abgerundet ist, wodurch Beschädigungen an der Tülle vermieden werden.

Vorteilhaft ist es auch, wenn der Schieber in einem Bereich, insbesondere an einem der Tülle zugewandten Ende, zumindest im Wesentlichen konusförmig ausgebildet ist, wodurch ebenfalls das Einbringen der Tülle in die Befestigungsöffnung erleichtert wird.

Auch ist es vorteilhaft, wenn der Schieber an einem Ende, insbesondere an einem Ende des zumindest im Wesentlichen konusförmig ausgebildeten Bereichs, vorzugsweise an einem der Befestigungsöffnung der Wischervorrichtung zugewandten Ende, abgerundet ist, wodurch ebenfalls Beschädigungen an der Tülle vermieden werden.

Außerdem ist es von Vorteil, wenn der Schieber zumindest eine Abflachung und/oder das Führungselement, insbesondere in einer den Führungskanal bildenden Wandung, eine Öffnung, vorzugsweise einen Kanal, aufweist, wodurch das Einbringen der Tülle in die Befestigungsöffnung zusätzlich erleichtert wird.

Die Erfindung betrifft auch ein Verfahren zur Herstellung einer Wischervorrichtung. Das Verfahren zeichnet sich dadurch aus, dass mittels einer Vorrichtung gemäß der vorhergehenden Beschreibung eine Tülle in eine Befestigungsöffnung der Wischervorrichtung eingebracht wird.

### Zeichnungen

In den Zeichnungen sind Ausführungsbeispiele der Erfindung schematisch dargestellt und in der nachfolgenden Beschreibung näher erläutert. Es zeigen
Fig. 1 eine schematische Darstellung einer Wischervorrichtung in einem Kraftfahrzeug,
Fig. 2 eine perspektivische Darstellung einer Antriebsvorrichtung einer Wischervorrichtung,
Fig. 3 eine Explosionsdarstellung einer Wischerwelle mit einer Lagerbuchse,
Fig. 4 einen schematischen Querschnitt eines Ausführungsbeispiels einer Vorrichtung zum Einbringen einer Tülle in eine Befestigungsöffnung einer Wischervorrichtung,
Fig. 5 einen schematischen Querschnitt eines Ausführungsbeispiels einer Vorrichtung zum Einbringen einer Tülle in eine Befestigungsöffnung einer Wischervorrichtung,
Fig. 6 einen schematischen Querschnitt eines Ausführungsbeispiels einer Vorrichtung zum Einbringen einer Tülle in eine Befestigungsöffnung einer Wischervorrichtung,

### Beschreibung der Ausführungsbeispiele

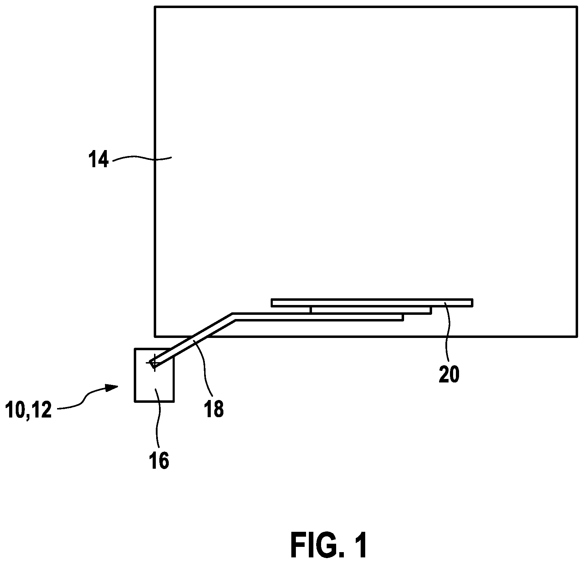

In Fig. 1 ist eine schematische Darstellung einer Wischervorrichtung 10, im vorliegenden Fall einer Scheibenwischervorrichtung 12, für ein Kraftfahrzeug gezeigt, über die eine Fahrzeugscheibe 14, bei der es sich um eine Frontscheibe oder eine Heckscheibe handeln kann, gereinigt werden kann. Die Wischervorrichtung 10 umfasst eine Antriebsvorrichtung 16, die einen Wischerarm 18 in eine pendelnde Drehbewegung versetzt, wobei der Wischerarm 18 ein Wischerblatt 20 trägt, das auf der Fahrzeugscheibe 14 aufliegt. Die Antriebsvorrichtung 16 umfasst einen elektrischen Antriebsmotor sowie ein Getriebe mit einer Wischerwelle, mit der der Wischerarm 18 gekoppelt ist. Der Motor versetzt über das Getriebe die Wischerwelle in die Drehpendelbewegung, welche auch von dem Wischarm 18 einschließlich Wischerblatt 20 ausgeführt wird.

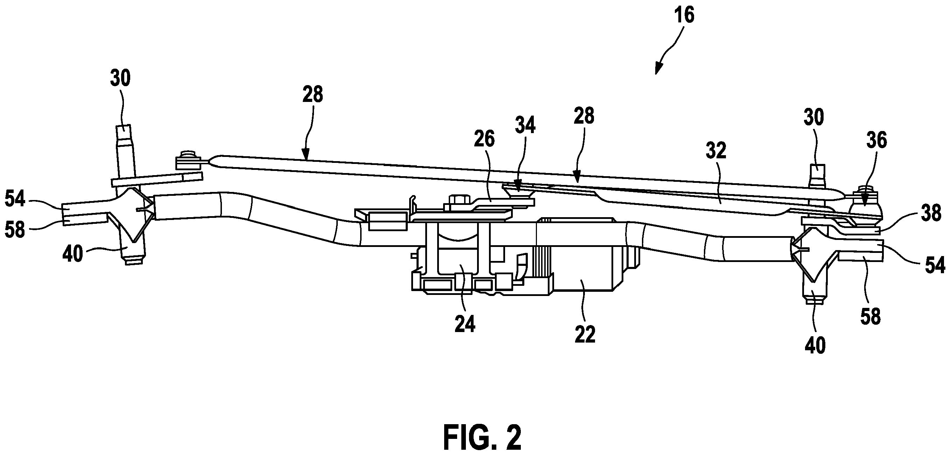

In Fig. 2 ist eine perspektivische Darstellung einer Antriebsvorrichtung 16 einer Wischervorrichtung 10 gezeigt. Gemäß Fig. 2 weist die Antriebsvorrichtung 16 einen elektrischen Antriebsmotor 22 auf, dem ein Getriebe 24 zur Bewegungsuntersetzung nachgeordnet ist, wobei das Getriebe 24 eine Motorkurbel 26 antreibt, die mit einem Wischergestänge 28 gekoppelt ist. Das Wischergestänge 28 versetzt zwei Wischerwellen 30, auf die jeweils ein Wischblatt 20 aufsetzbar ist, in die pendelnde Drehbewegung. Teil des Wischer- bzw. Kurbelgestänges 28 ist eine Gelenkstange 32, die im Bereich beider Stirnseiten über Gelenke 34 bzw. 36 mit der Motorkurbel 26 bzw. einer Wischerkurbel 38 gekoppelt ist, welche anderen Endes mit der Wischerwelle 10 verbunden ist.

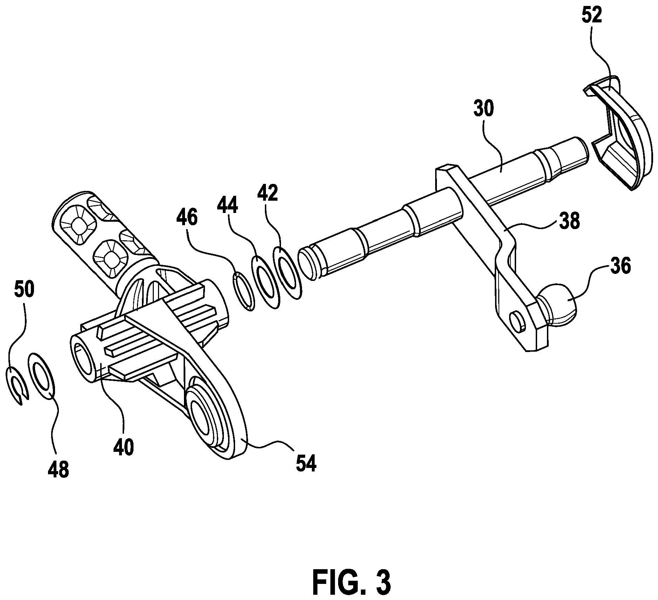

Die Wischerwellen 30 sind jeweils in einer Lagerbuchse 40 drehbar aufgenommen. Entsprechend ist in Fig. 3 eine Explosionsdarstellung einer Wischerwelle 30 mit einer Lagerbuchse 40 gezeigt. Anordnung weist eine Federscheibe 42, eine Druckscheibe 44, einen O-Ring 46, eine Unterlagscheibe 48, ein Positionierungselement 50 und eine Abdeckkappe 52 auf. Dabei ist die Wischerkurbel 38 an der Wischerwelle 40 an einer dem Wischerarm 18 zugewandten Seite der Lagerbuchse 40, bzw. einer Frontseite, angeordnet ist. Alternativ ist es aber auch möglich, dass die Wischerkurbel 38 an der Wischerwelle 40 an einer dem Wischerarm 18 abgewandten Seite der Lagerbuchse 40, bzw. einer Rückseite, angeordnet ist.

Die Antriebsvorrichtung aus Fig. 2 wird an Befestigungsvorsprüngen 54 der Lagerwellen 40 an die Karosserie des Kraftfahrzeuges unterhalb der Fahrzeugscheibe 14 befestigt. Die Befestigungsvorsprünge 54 weisen dabei jeweils Befestigungsöffnungen 56 auf, in welche wiederum Tüllen 58 eingebracht sind. Die Tüllen 58 sind dazu vorgesehen Vibrationen von der Karosserie des Kraftfahrzeuges, beispielsweise während einer Fahrt, abzudämpfen.

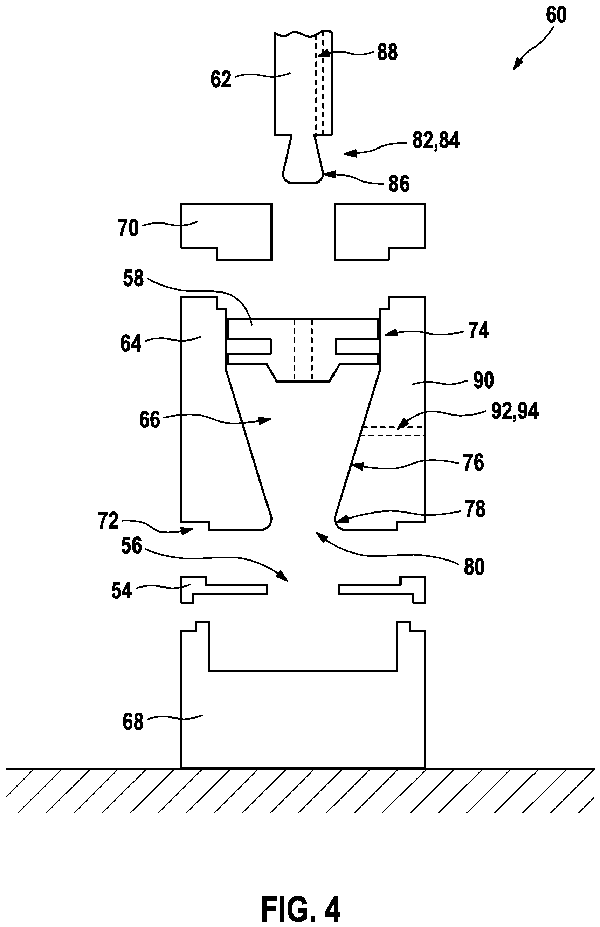

Die vorliegende Erfindung betrifft nun eine Vorrichtung 60 zum Einbringen einer Tülle 58 in eine Befestigungsöffnung 56 der Wischervorrichtung 10, bzw. eines Befestigungsvorsprungs 54 der Antriebsvorrichtung 16. Die Vorrichtung 60 umfasst dabei einen Schieber 62 zum Einschieben der Tülle 58 in die Befestigungsöffnung 56 des jeweiligen Befestigungsvorsprungs 54 der Antriebsvorrichtung 16. Entsprechend ist in Fig. 4-6 jeweils ein schematischer Querschnitt eines Ausführungsbeispiels einer Vorrichtung 60 zum Einbringen der Tülle 58 in die Befestigungsöffnung 56 der Wischervorrichtung 10, bzw. des Befestigungsvorsprungs 54 der Antriebsvorrichtung 16, gezeigt. Die Fig. 4-6 Stellen entsprechend auch einen Ablauf des Einbringens der Tülle 58 in die Befestigungsöffnung 56 dar. Die Vorrichtung 60 ist dazu geeignet bei einer Herstellung einer Wischervorrichtung 10 in einem Serienverfahren eingesetzt zu werden Die Vorrichtung 60 zeichnet sich durch ein Führungselement 64 aus, welches einen Führungskanal 66 zum Führen der Tülle 58 beim Einschieben in die Befestigungsöffnung 56 aufweist. Dadurch kann die Tülle 58 gezielt und schnell in die Befestigungsöffnung 56 eingebracht werden. In dem vorliegenden Fall ist das Führungselement 64 zylindrisch ausgebildet. Der Schieber 62 kann dabei, beispielsweise mittels einer Pressvorrichtung, in axialer Richtung in das Führungselement 64, bzw. den Führungskanal 66, eingeschoben werden.

Auch zeichnet sich die Vorrichtung 60 durch eine Halterung 68 für zumindest einen Bereich der Wischervorrichtung 10, im vorliegenden Fall für einen Befestigungsvorsprung 54, aus, welcher die Befestigungsöffnung 56 der Wischervorrichtung 10, bzw. der Antriebsvorrichtung 16, aufweist. So kann das Einbringen der Tülle 58 in die Befestigungsöffnung 56 auf einer stabilen Unterlage erfolgen. Auch wird durch die Halterung 68 der Befestigungsvorsprung 54 relativ zur Vorrichtung 60 positioniert, wodurch das Einbringen eines Befestigungsvorsprung 54 in die Vorrichtung 60 vereinfacht wird.

Darüber hinaus weist die Vorrichtung 60, bzw. das Führungselement 64, eine Abdeckung 70 zur Führung und/oder Zentrierung des Schiebers 62 auf. Dadurch wird die Handhabe des Schiebers 62 vereinfacht, wodurch wiederum das Einbringen der Tülle 58 in die Befestigungsöffnung 56 vereinfacht wird.

Zudem weist das Führungselement 64 eine Ausnehmung 72 zur Zentrierung des Führungskanals 66 gegenüber der Befestigungsöffnung 56 auf. Dadurch wird das Ausrichten der Vorrichtung 60 gegenüber der Befestigungsöffnung 56 vereinfacht, wodurch wiederum die Handhabe mit der Vorrichtung 60 vereinfacht wird.

Des Weiteren weist der Führungskanal 66 einen Bereich 74 zur Aufnahme der Tülle 58 in das Führungselement 64 auf, der zumindest im Wesentlichen zylindrisch ausgebildet ist. Dadurch kann die Tülle 58 schnell und einfach in das Führungselement 64 eingebracht werden, wodurch wiederum das Einbringen der Tülle 58 in die Befestigungsöffnung 56 insgesamt schneller erfolgen kann.

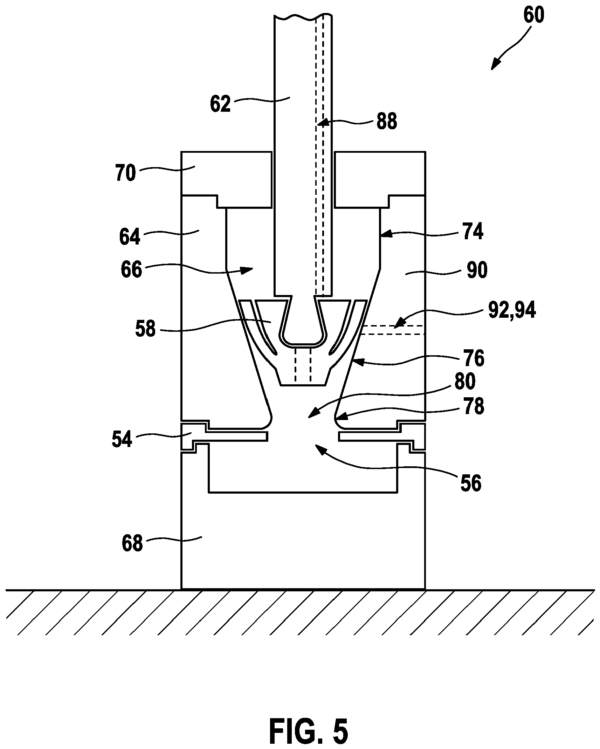

Darüber hinaus weist der Führungskanal 66 einen Bereich 76 zur Deformierung der Tülle 58 beim Einschieben in die Befestigungsöffnung 56 auf, der zumindest im Wesentlichen konusförmig zulaufend ausgebildet ist. Dadurch wird die Tülle 58 während des Einschiebens in die Befestigungsöffnung 56 im Führungskanal 66 deformiert, bzw. zusammengepresst, wodurch diese einfacher in die Befestigungsöffnung 56 eingebracht werden kann (siehe Fig. 5). Entsprechend wird das Einbringen der Tülle 58 in die Befestigungsöffnung 56 erleichtert.

Zudem ist der Führungskanal 66 an einem Ende 78, im vorliegenden Fall an einem Ende 78 des zumindest im Wesentlichen konusförmig zulaufendem Bereichs 76, vorzugsweise an einer Austrittsöffnung 80, abgerundet, wodurch Beschädigungen an der Tülle 58 vermieden werden.

Außerdem ist der Schieber 62 in einem Bereich 82, im vorliegenden Fall an einem der Tülle 58 zugewandten Ende 84, zumindest im Wesentlichen konusförmig ausgebildet. Dadurch hat die Tülle 58 mehr Raum zur Deformierung und kann damit enger zusammengepresst werden, wodurch wiederum das Einschieben der Tülle 58 in die Befestigungsöffnung 56 zusätzlich erleichtert wird (siehe Fig. 5).

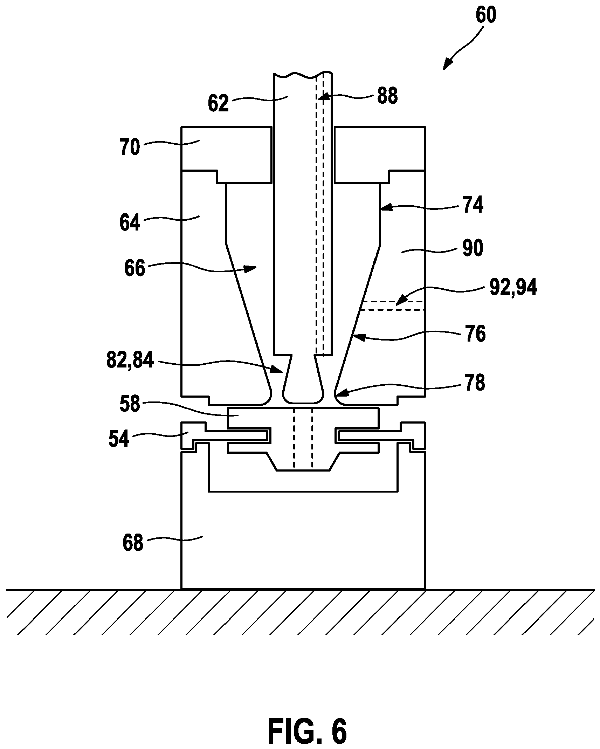

Darüber hinaus ist der Schieber 62 an einem Ende 86, im vorliegenden Fall an einem Ende des zumindest im Wesentlichen konusförmig ausgebildeten Bereichs 82, abgerundet, wodurch ebenfalls Beschädigungen an der Tülle 58 vermieden werden. Zudem hilft die Rundung dabei, dass die Tülle 58 sich in der Befestigungsöffnung 56 mit weniger Wiederstand gegenüber der Führungselement 64 wieder ausdehnen kann. In dem vorliegenden Fall schiebt die sich ausdehnende Tülle 58 das Führungselement 64 sogar relativ zum Schieber 62 nach oben, sodass bei eingebrachter Tülle 58 das Führungselement 64 zum Befestigungsvorsprung 54 beanstandet ist (siehe Fig. 6). Dies wiederum lässt von außen erkennen, dass die Tülle 58 vollständig in die Befestigungsöffnung 56 eingebracht ist.

In dem vorliegenden Fall wird die Tülle 58 vor dem Einschieben in das Führungselement 64 zusätzlich mit einer Gleitmasse, wie beispielsweise Öl, eingeschmiert, wodurch weniger Kraft für das Einschieben der Tülle 58 aufgewendet werden muss und entsprechend das Einschieben zusätzlich erleichtert wird.

Ferner weist der Schieber 62 eine Abflachung 88 und das Führungselement 64, im gezeigten Fall in einer den Führungskanal 66 bildenden Wandung 90, eine Öffnung 92, bzw. einen Kanal 94, auf. Die Abflachung 88 bildet dabei zusammen mit der Abdeckung 70 einen Kanal. So kann beim Einschieben der Tülle 58 mittels der Abflachung 88 und der Öffnung 92 Luft von außerhalb des Führungselement 64 in den Führungskanal 66 eindringen, wodurch vermieden wird das sich im Führungskanal 66 ein Vakuum bildet, welches dem Einschieben entgegenwirkt. Entsprechend muss für das Einschieben der Tülle 58 in die Befestigungsöffnung 56 weniger Kraft aufgewendet werden, wodurch dieses erleichtert wird. Alternativ wäre es aber auch möglich das ausschließlich der Schieber 62 die Abflachung 88 oder ausschließlich das Führungselement 64 die Öffnung 92 aufweist.

## Patentansprüche

1. Vorrichtung (60) zum Einbringen einer Tülle (58) in eine Befestigungsöffnung (56) einer Wischervorrichtung (10), umfassend einen Schieber (62) zum Einschieben der Tülle (58) in die Befestigungsöffnung (56) der Wischervorrichtung (10), wobei die Vorrichtung (60) dazu geeignet ist, bei einer Herstellung der Wischervorrichtung (10) in einem Serienverfahren eingesetzt zu werden, **gekennzeichnet durch** ein Führungselement (64) welches einen Führungskanal (66) zum Führen der Tülle (58) beim Einschieben in die Befestigungsöffnung (56) aufweist.

2. Vorrichtung (60) nach einem der vorhergehenden Ansprüche, **gekennzeichnet durch** eine Halterung (68) für zumindest einen Bereich der Wischervorrichtung (10), welcher die Befestigungsöffnung (56) der Wischervorrichtung (10) aufweist.

3. Vorrichtung (60) nach einem der vorhergehenden Ansprüche, **dadurch gekennzeichnet, dass** das Führungselement (64) eine Abdeckung (70) zur Führung und/oder Zentrierung des Schiebers (62) aufweist.

4. Vorrichtung (60) nach einem der vorhergehenden Ansprüche, **dadurch gekennzeichnet, dass** das Führungselement (64) zumindest eine Ausnehmung (72) zur Zentrierung des Führungskanals (66) gegenüber der Befestigungsöffnung (56) der Wischervorrichtung (10) aufweist.

5. Vorrichtung (60) nach einem der vorhergehenden Ansprüche, **dadurch gekennzeichnet, dass** der Führungskanal (66) einen Bereich (74) zur Aufnahme der Tülle in das Führungselement aufweist, der zumindest im Wesentlichen zylindrisch ausgebildet ist.

6. Vorrichtung (60) nach einem der vorhergehenden Ansprüche, **dadurch gekennzeichnet, dass** der Führungskanal (66) einen Bereich (76) zur Deformierung der Tülle (58) beim Einschieben in die Befestigungsöffnung (56) aufweist, der zumindest im Wesentlichen konusförmig zulaufend ausgebildet ist.

7. Vorrichtung (60) nach einem der vorhergehenden Ansprüche, **dadurch gekennzeichnet, dass** der Führungskanal (66) an einem Ende (78), insbesondere an einem Ende (78) des zumindest im Wesentlichen konusförmig zulaufendem Bereichs, vorzugsweise an einer Austrittsöffnung (80), abgerundet ist.

8. Vorrichtung (60) nach einem der vorhergehenden Ansprüche, **dadurch gekennzeichnet, dass** der Schieber (62) in einem Bereich (82), insbesondere an einem der Tülle zugewandten Ende (84), zumindest im Wesentlichen konusförmig ausgebildet ist.

9. Vorrichtung (60) nach einem der vorhergehenden Ansprüche, **dadurch gekennzeichnet, dass** der Schieber (62) an einem Ende, insbesondere an einem Ende des zumindest im Wesentlichen konusförmig ausgebildeten Bereichs (86), abgerundet ist.

10. Vorrichtung (60) nach einem der vorhergehenden Ansprüche, **dadurch gekennzeichnet, dass** der Schieber (62) zumindest eine Abflachung (88) und/oder das Führungselement (64), insbesondere in einer den Führungskanal (66) bildenden Wandung (90), eine Öffnung (92), vorzugsweise einen Kanal (94), aufweist.

11. Verfahren zur Herstellung einer Wischervorrichtung (10), **dadurch gekennzeichnet, dass** mittels einer Vorrichtung (60) gemäß der vorhergehenden Ansprüche eine Tülle (58) in eine Befestigungsöffnung (56) der Wischervorrichtung (10) eingebracht wird.

## Claims

1. Device (60) for introducing a grommet (58) into a fastening opening (56) of a wiper device (10), comprising a pusher (62) for pushing the grommet (58) into the fastening opening (56) of the wiper device (10), wherein the device (60) is suitable, in the case of production of the wiper device (10), for use in a serial-production process, **characterized by** a guide element (64) which has a guide channel (66) for guiding the grommet (58) during the pushing into the fastening opening (56).

2. Device (60) according to one of the preceding claims, **characterized by** a holder (68) for at least one region of the wiper device (10), which at least one region has the fastening opening (56) of the wiper device (10).

3. Device (60) according to either of the preceding claims, **characterized in that** the guide element (64) has a cover (70) for guiding and/or centring the pusher (62).

4. Device (60) according to one of the preceding claims, **characterized in that** the guide element (64) has at least one recess (72) for centring the guide channel (66) in relation to the fastening opening (56) of the wiper device (10).

5. Device (60) according to one of the preceding claims, **characterized in that** the guide channel (66) has a region (74) for receiving the grommet into the guide element, which region is of at least substantially cylindrical form.

6. Device (60) according to one of the preceding claims, **characterized in that** the guide channel (66) has a region (76) for deformation of the grommet (58) during the pushing into the fastening opening (56), which region is of at least substantially conically tapering form.

7. Device (60) according to one of the preceding claims, **characterized in that** the guide channel (66) is rounded at one end (78), in particular at an end (78) of the at least substantially conically tapering region, preferably at an exit opening (80).

8. Device (60) according to one of the preceding claims, **characterized in that** the pusher (62) is of at least substantially conical form in one region (82), in particular at an end (84) which faces towards the grommet.

9. Device (60) according to one of the preceding claims, **characterized in that** the pusher (62) is rounded at one end, in particular at an end of the region (86) of at least substantially conical form.

10. Device (60) according to one of the preceding claims, **characterized in that** the pusher (62) has at least one flattened portion (88) and/or the guide element (64) has, in particular in a wall (90) forming the guide channel (66), an opening (92), preferably a channel (94).

11. Method for producing a wiper device (10), **characterized in that** a grommet (58) is introduced into a fastening opening (56) of the wiper device (10) by means of a device (60) according to the preceding claims.

## Revendications

1. Dispositif (60) pour introduire une douille (58) dans une ouverture de fixation (56) d'un dispositif d'essuie-glace (10), comprenant un coulisseau (62) pour insérer la douille (58) dans l'ouverture de fixation (56) du dispositif d'essuie-glace (10), le dispositif (60) étant adapté pour être utilisé dans un procédé en série lors d'une fabrication du dispositif d'essuie-glace (10), **caractérisé par** un élément de guidage (64) qui présente un canal de guidage (66) pour guider la douille (58) lors de l'insertion dans l'ouverture de fixation (56).

2. Dispositif (60) selon l'une quelconque des revendications précédentes, **caractérisé par** un support (68) pour au moins une zone du dispositif d'essuie-glace (10) qui présente l'ouverture de fixation (56) du dispositif d'essuie-glace (10).

3. Dispositif (60) selon l'une quelconque des revendications précédentes, **caractérisé en ce que** l'élément de guidage (64) présente un couvercle (70) pour guider et/ou centrer le coulisseau (62).

4. Dispositif (60) selon l'une quelconque des revendications précédentes, **caractérisé en ce que** l'élément de guidage (64) présente au moins un évidement (72) pour centrer le canal de guidage (66) par rapport à l'ouverture de fixation (56) du dispositif d'essuie-glace (10) .

5. Dispositif (60) selon l'une quelconque des revendications précédentes, **caractérisé en ce que** le canal de guidage (66) présente une zone (74) pour recevoir la douille dans l'élément de guidage, qui est configurée au moins essentiellement sous forme cylindrique.

6. Dispositif (60) selon l'une quelconque des revendications précédentes, **caractérisé en ce que** le canal de guidage (66) présente une zone (76) pour déformer la douille (58) lors de l'insertion dans l'ouverture de fixation (56), qui est configurée au moins essentiellement sous forme effilée en cône.

7. Dispositif (60) selon l'une quelconque des revendications précédentes, **caractérisé en ce que** le canal de guidage (66) est arrondi à une extrémité (78), notamment à une extrémité (78) de la zone au moins essentiellement effilée en cône, de préférence à une ouverture de sortie (80).

8. Dispositif (60) selon l'une quelconque des revendications précédentes, **caractérisé en ce que** le coulisseau (62) est configuré au moins essentiellement en forme de cône dans une zone (82), notamment à une extrémité (84) tournée vers la douille.

9. Dispositif (60) selon l'une quelconque des revendications précédentes, **caractérisé en ce que** le coulisseau (62) est arrondi à une extrémité, notamment à une extrémité de la zone (86) configurée au moins essentiellement en forme de cône.

10. Dispositif (60) selon l'une quelconque des revendications précédentes, **caractérisé en ce que** le coulisseau (62) présente au moins un aplatissement (88) et/ou l'élément de guidage (64), notamment dans une paroi (90) formant le canal de guidage (66), présente une ouverture (92), de préférence un canal (94).

11. Procédé de fabrication d'un dispositif d'essuie-glace (10), **caractérisé en ce qu'**une douille (58) est introduite dans une ouverture de fixation (56) du dispositif d'essuie-glace (10) au moyen d'un dispositif (60) selon les revendications précédentes.
